# FASCICULE DE BREVET EUROPEEN

(11) **EP 0 843 741 B1**
(45) Date de publication et mention de la délivrance du brevet: **23.02.2000**
(21) Numéro de dépôt: 96928495.9
(22) Date de dépôt: 08.08.1996
(51) Int. Cl.: C22B 19/14, C22B 19/30, C22B 7/00

(54) **PROCEDE DE VALORISATION DES DECHETS, CONSTITUES DE TOLES RECOUVERTES SUR AU MOINS UNE FACE D'UNE COUCHE DE ZINC**
VERFAHREN ZUR VERWERTUNG VON ABFALLSTOFFEN BESTEHEND AUS MIT ZINK BESCHICHTETEM BLECHSCHROTT
METHOD FOR UPGRADING WASTE MATERIAL COMPRISING SHEET METAL WITH A ZINC PLATING ON AT LEAST ONE SIDE THEREOF

(30) Priorité: 09.08.1995 FR 9509666
(43) Date de publication de la demande: 27.05.1998
(73) Titulaire: Compagnie Europeenne de Dezingage, 59880 Saint Saulve (FR)
(72) Inventeur: CAMPENON, Bernard, F-59880 Saint-Saulve (FR); GREEFKES, Johannes, NL-1946 AB Berverw'jk (NL)
(74) Mandataire: Giraud, Françoise
(86) Numéro de dépôt international: FR9601265
(87) Numéro de publication internationale: WO9706283

(56) Documents cités:
- EP-A- 0 479 326
- EP-A- 0 483 017
- DE-A- 3 441 714
- FR-A- 2 156 316
- FR-A- 2 397 472
- ING NIEURS DE L'AUTOMOBILE, no. 689, Mai 1994, GARCHES, FR, pages 6-8, XP000450965 SOPHIE GALLET: "Le recyclage des équipements automobiles: exemple des batteries, des pare-chocs et du zinc des carrosseries galvanisées"

## Description

La présente invention concerne un procédé de valorisation de déchets constitués de tôles recouvertes sur au moins une face d'une couche de zinc.

On désignera dans le présent mémoire ces tôles par tôles zinguées.

L'invention trouve tout particulièrement son application dans la récupération et la valorisation de déchets de tôles zinguées produites par l'industrie automobile au cours de l'élaboration des différentes pièces de voitures constituées desdites tôles, en particulier au cours des opérations d'emboutissage et de découpage desdites tôles.

L'article intitulé "Le recyclage des Equipements Automobiles : exemples des batteries, des pare-chocs et du zinc des carrosseries galvanisées" par Mme Sophie GALLET, paru dans Ingénieurs de l'Automobile (1994) Mai, N° 689, GARCHES, FR, pages 6-8, indique à propos des déchets de tôles zinguées qu'ils sont soumis à des opérations de broyage puis envoyés pour traitement dans des usines sidérurgiques de deuxième fusion.

Le brevet EP-0 479 326 décrit un procédé de dézingage de déchets galvanisés par traitement caustique de ces déchets.

Actuellement, l'industrie automobile consomme, en particulier pour l'élaboration des carrosseries et des portières de voitures, des quantités croissantes de tôles d'emboutissage recouvertes d'une couche de zinc destinée à la protection de ladite tôle contre la corrosion.

Les différentes opérations au cours desquelles les carrosseries sont élaborées à partir des tôles conduisent nécessairement à la production de quantités relativement importantes de déchets dits "chutes neuves" de production automobile.

Ces déchets sont constitués de fragments de tôles zinguées de tailles diverses et ayant déjà éventuellement subi un certain nombre d'opérations d'emboutissage et de découpe. Il s'agit donc de fragments de tôles zinguées mais qui sont généralement loin d'être plans.

Par ailleurs, ces déchets, étant donné le milieu et les conditions dans lesquels ils sont produits, sont généralement plus ou moins souillés par des traces de graisse.

C'est à ce type de déchets, initialement entassés plus ou moins en vrac dans les ateliers que s'adresse le procédé de la présente invention.

La présence de zinc en quantité relativement importante à la surface des déchets empêche le recyclage direct de ces déchets en fonderie ou en aciérie.

En effet, la réutilisation des déchets de tôles zinguées pose différents problèmes quelque soit le type d'aciéries dans lequel on tente ensuite de recycler ces déchets.

En effet, d'une façon générale les tôles zinguées utilisées dans l'industrie automobile contiennent en moyenne de 12 à 24 kilos de zinc par tonne de tôle.

La fusion des déchets ne peut se faire sans se heurter à différents problèmes liés d'une part au respect des bonnes conditions d'hygiène et de sécurité, d'autre part à la résistance des matériaux utilisés pour réaliser cette fusion.

Plus précisément, la présence du zinc rend nécessaire :
- d'aspirer et de traiter les fumées,
- de contrôler la concentration du zinc dans les poussières recueillies par les filtres,
- de contrôler la tenue des filtres dans les conditions auxquelles ils sont soumis,
- de capter les fumées, ce qui présente un certain nombre de difficultés,
- d'éviter tous les problèmes d'irritation pulmonaire et digestive pour les personnes amenées à travailler dans les ateliers de fusion.

Par ailleurs, il est bien connu que, la formation d'un eutectique ZnO/SiO₂ dont le point de fusion est de 1342° C peut être à l'origine d'une dégradation des réfractaires constituant le revêtement des fours de fonderie.

Par ailleurs, il est également connu que la présence de zinc liquide risque de nuire grandement aux revêtements à base de farine de silice que l'on trouve fréquemment dans les coquilles de centrifugation.

On distingue en effet plus précisément trois sortes d'aciéries :
- les aciéries électriques,
- les aciéries de conversion,
- les fonderies à fours à induction.

La fusion des déchets de tôles zinguées dans les aciéries électriques pose relativement peu de problèmes au niveau des installations elles-mêmes. Toutefois le principal problème se situe au niveau des poussières où le zinc se trouve concentré, ce qui nécessite un traitement très onéreux.

La fusion des chutes de tôles revêtues de zinc dans les fonderies à fours à induction pose, quant à elle, également des problèmes liés tant à la tenue des réfractaires qu'à l'émission des fumées dans les sites.

Ainsi donc l'industrie automobile se trouve confrontée à un grave problème de recyclage des déchets constitués de tôles zinguées et cela, quelque soit le type d'aciérie ou de fonderie vers lequel le recyclage des déchets est envisagé.

La demanderesse au cours de ses recherches a mis au point un procédé qui, non seulement, permet de résoudre, de façon totalement satisfaisante pour l'environnement, les problèmes posés par le recyclage de ces déchets mais également, permet de valoriser totalement les déchets en récupérant à la fois la tôle sous une forme permettant sa réutilisation en fonderie ou en aciérie et la récupération du zinc dans un état parfaitement pur.

Le procédé mis au point par la demanderesse s'applique tout particulièrement aux déchets de tôles zinguées produits dans l'élaboration des automobiles mais il peut également s'appliquer à tous les déchets constitués d'une tôle d'acier recouverte d'une couche de zinc destinée en particulier à la protection anticorrosion de ladite tôle.

Ainsi, selon une de ses caractéristiques essentielles, l'invention concerne un procédé de valorisation de déchets constitués de tôles recouvertes sur au moins une face d'une couche de zinc, consistant à soumettre lesdits déchets aux étapes successives suivantes :
a) une première étape dite de traitement mécanique desdits déchets destinée à améliorer l'accessibilité desdites couches de zinc à une attaque chimique ultérieure, en augmentant la surface d'attaque accessible des parties formant les couches de zinc, d'une part en réalisant la séparation desdites tôles les unes des autres par froissage desdits déchets et, d'autre part, en créant des fissures dans lesdites couches de zinc,
b) une deuxième étape dite d'attaque chimique destinée à dissoudre le zinc, par immersion desdits déchets dans un bain basique,
c) une troisième étape de séparation des tôles débarrassées du zinc et du bain d'attaque chimique ayant dissous le zinc.
d) une quatrième étape de traitement par électrolyse du bain d'attaque chimique pour récupérer le zinc dissous à la (aux) cathode(s).

Comme on l'a vu précédemment, les déchets qui sont traités selon la présente invention sont généralement des déchets de formes très diverses qui sont entassés en vrac. Il est indispensable pour les raisons exposées précédemment d'éliminer le zinc de façon aussi totale que possible avant toute tentative de fusion des déchets. Cest pourquoi, il est nécessaire de rendre l'attaque chimique aussi totale que possible, de façon à débarrasser au mieux les déchets de la couche de zinc qui les recouvre.

Cette opération est rendue possible par la réalisation de la première étape de traitement mécanique qui a pour but d'améliorer l'accessibilité du zinc à l'attaque chimique. Cette première opération de traitement mécanique consiste à améliorer la séparation des tôles les unes des autres, de façon à rendre plus accessibles les couches de zinc à une attaque chimique par une solution basique. Cette opération est réalisée en imposant aux déchets une opération de froissage qui a pour résultat une séparation physique des tôles les unes des autres. Par ailleurs, on améliore l'accessibilité de la couche de zinc accessible par le bain chimique en créant des fissures dans les couches de zinc.

Selon une première variante du procédé de l'invention, les deux opérations ci-dessus, constituant la première étape du procédé, sont réalisées simultanément en utilisant un broyeur déchiqueteur.

Les déchets sont alors introduits dans ce broyeur déchiqueteur et on provoque le passage de ces déchets à travers des grilles de calibre préalablement déterminé.

Ainsi les chutes neuves de ferrailles sont introduites dans un broyeur déchiqueteur où, grâce à un effet combiné de concassage et d'impact, les pièces de ferraille se trouvent déchiquetées et comprimées jusqu'à ce qu'elles puissent passer par les ouvertures de la grille.

Après le passage par les ouvertures de la grille, les pièces de ferraille déchiquetées sont rejetées et dirigées vers l'ouverture de sortie du broyeur par l'intermédiaire d'une trémie collectrice.

Les déchets issus de cette première étape de broyage ont généralement des dimensions de 10 à 90 cm, avantageusement des dimensions de l'ordre de 30 cm.

Les déchets ayant subi cette première étape de traitement mécanique sont ensuite immergés dans un bain basique destiné à dissoudre aussi totalement que possible la couche de zinc recouvrant ces déchets.

Le bain basique est avantageusement constitué d'une solution de soude.

On choisira des conditions dans lesquelles le zinc se trouve dissous aussi complètement que possible par le bain basique.

A titre d'exemple, on réalisera une immersion avec des temps de séjour de l'ordre de 30 à 60 minutes, avantageusement de l'ordre de 45 minutes dans un bain de soude contenant 9 à 11 % de soude en masse, le bain étant maintenu à une température comprise entre 79 et 86° C.

Les conditions ci-dessus sont données à titre d'exemple. Ces conditions dépendent, bien entendu, de la composition des déchets, en particulier de l'épaisseur de la couche de zinc. Les conditions d'attaque chimique pourront être modifiées tant en ce qui concerne la composition du bain basique que sa température et la durée de séjour des déchets dans le bain. Mais d'une façon générale, on choisira des conditions telles qu'il subsiste, après traitement chimique, une teneur en zinc inférieure à 100 ppm dans les déchets de tôles traitées.

Il a été constaté que les forces de cisaillement mécanique auxquelles ont été soumis les déchets, lors des opérations de broyage et de déversement préalable avant l'introduction des ferrailles dans le bain d'attaque basique, ouvrent très nettement la couche de zinc sur les ferrailles, à un point tel que le bain basique peut arriver en contact direct avec le fer, ce qui accélère le processus de dissolution du zinc dans le réacteur de dissolution.

Après dissolution du zinc, les ferrailles sont retirées du réacteur de dissolution, avantageusement de manière continue, et dirigées vers un système de lavage, destiné à éliminer les traces de bain basique qui peuvent subsister sur lesdites ferrailles après le traitement destiné à dissoudre le zinc.

Les impuretés huileuses provenant des déchets traités se trouvent mises sous forme d'émulsion lors de l'attaque chimique.

On procède avantageusement à l'évacuation en continu de cette émulsion lors de l'attaque chimique, par exemple, en évacuant en continu cette émulsion par l'intermédiaire d'encoches de trop-plein prévues dans le réacteur d'attaque chimique.

Après élimination du zinc par dissolution dans le bain chimique, on récupère les ferrailles et on les soumet à une opération de lavage avantageusement à un lavage à contre-courant, destinée à éliminer totalement les traces basiques.

Cette opération de lavage est avantageusement réalisée dans un tambour rotatif de nettoyage perforé. L'utilisation d'un tel dispositif pour le lavage permet de récupérer dans un premier temps le liquide qui s'écoule et de le renvoyer vers le réacteur d'attaque chimique.

Les tôles débarrassées du zinc qui les recouvre sont ensuite soumises à une étape destinée à densifier les déchets, de façon à respecter le cahier des charges imposé par le type de fonderie où l'on souhaite recycler le produit.

Cette étape de densification est réalisée avantageusement par broyage des déchets débarrassés de leur couche de zinc. Cette étape est avantageusement réalisée dans un broyeur-déchiqueteur et la densification est réalisée classiquement en utilisant des conditions telles que l'on réalise un passage en force des déchets à travers les trous de la grille du broyeur, de façon à obtenir la densité souhaitée.

Selon le procédé de l'invention, on récupère parallèlement le zinc dissous dans le bain d'attaque chimique après ladite attaque. Cette opération de récupération est réalisée par électrolyse, le bain d'attaque chimique récupéré sera additionné éventuellement des eaux de lavage des ferrailles et servira d'électrolyte.

La conductivité de l'électrolyte est ajustée en continu par mesure en continu de son pH. La conductivité est réglée de façon à être comprise avantageusement entre 400 et 500 mmho/cm.

L'électrolyte débarrassé du zinc peut être recyclé en continu, après réchauffage, vers le réacteur de dissolution du zinc.

On peut utiliser, pour mettre en oeuvre le procédé ci-dessus, tout système d'électrolyse comprenant au moins une anode et une cathode, dans des conditions où le zinc se dépose sur la (les) cathode(s).

Toutefois, selon une variante particulièrement préférée de l'invention et qui permet de rendre le procédé complet totalement continu, on détache, en continu des cathodes du dispositif d'électrolyse, le zinc qui s'y dépose au cours de l'étape d'électrolyse.

Cette étape d'élimination du zinc peut être rendue possible, en choisissant des cathodes de nature particulière qui permettent d'éliminer en continu le zinc déposé, en imposant des vibrations à ces cathodes.

Un moyen particulièrement adapté consiste à munir les électrolyseurs de cathodes constituées de magnésium sur lequel le zinc se dépose sous forme de poudre fine ne formant pas de dendrite. Ainsi le zinc déposé s'accroche mal et par conséquent peut être aisément décroché par simples vibrations imposées auxdites cathodes.

L'électrolyte contenant l'hydroxyde de zinc est envoyé en continu dans des cellules, par exemple des cellules de 4000 litres chacune, d'un réacteur d'électrolyse à bain liquide.

L'électrolyte à base d'hydroxyde de sodium contenant du zinc est avantageusement maintenu à une température de l'ordre de 80 à 85°.

Le liquide, arrivant dans chacune des cellules d'électrolyse à travers un ensemble de plaques servant de cathodes et d'anodes, est soumis à un processus d'électrolyse.

Il permet de déposer du zinc élémentaire parfaitement pur sur les cathodes. Les cathodes et les anodes agissent comme conducteurs. L'électrolyte agit comme milieu de transport et comme second conducteur pour les ions. La quantité de zinc qui sédimente sur les plaques servant de cathodes dépend, bien entendu, de l'équivalent électrochimique et peut être calculé à partir de la loi générale de Faraday. L'épaisseur de la couche de zinc obtenue sur les plaques servant de cathodes dépend, bien entendu, de l'intensité du courant électrique à cet endroit des plaques.

Les couches de zinc qui se déposent sur les cathodes peuvent être détachées à intervalle régulier, en particulier par des forces de vibrations mécaniques externes.

Le zinc, ainsi détaché, descend sous forme d'une suspension par gravité vers la sortie des cellules du réacteur d'électrolyse.

L'électrolyte contenant le zinc en suspension peut donc être récupéré en continu. On concentre ensuite cette suspension pour récupérer le zinc élémentaire.

Par ailleurs, l'électrolyte débarrassé ainsi du zinc récupéré aux cathodes peut être recyclé vers le réacteur de dissolution chimique du zinc.

Ainsi donc le procédé décrit dans le mémoire ci-dessus présente l'avantage tout particulier de pouvoir être rendu totalement continu et de permettre un recyclage quasi-total des réactifs utilisés, notamment du bain de dissolution du zinc.

L'invention propose donc un procédé qui présente l'avantage tout particulier de pouvoir être réalisé avec des rejets quasi nuls de produits agressifs pour l'environnement.

Le procédé de l'invention s'applique tout particulièrement aux déchets appelés chutes neuves de tôles zinguées dans l'industrie automobile, ces déchets étant formés lors des différentes opérations d'élaboration des automobiles à partir des tôles zinguées, en particulier lors des étapes d'emboutissage. Il permet notamment de récupérer à partir de ces déchets des tôles dites tôles dézinguées qui sont réutilisables en fonderie ainsi que du zinc métallique élémentaire.

Ainsi le procédé de l'invention permet donc de valoriser totalement un déchet inutilisable directement, en récupérant ses deux constituants essentiels qui peuvent être à leur tour valorisés.

Le procédé de l'invention trouve par ailleurs son application pour la valorisation de tous les déchets d'autre provenance, constitués en particulier de tôles recouvertes sur au moins une face d'une couche de zinc, en particulier de tôles emboutissables recouvertes d'une couche destinée à la protection de ladite feuille contre la corrosion.

A titre d'exemples d'autres produits auxquels s'applique le procédé de l'invention, on citera les tôles zinguées issues des différentes industries où sont élaborées des pièces d'acier ou de tôle qui doivent être protégées contre la corrosion, par exemple, les pièces destinées aux véhicules de tout type, les bardages et les habillages métalliques, les structures des charpentes métalliques.

L'exemple qui suit est donné à titre purement illustratif de l'invention.

### Exemple :

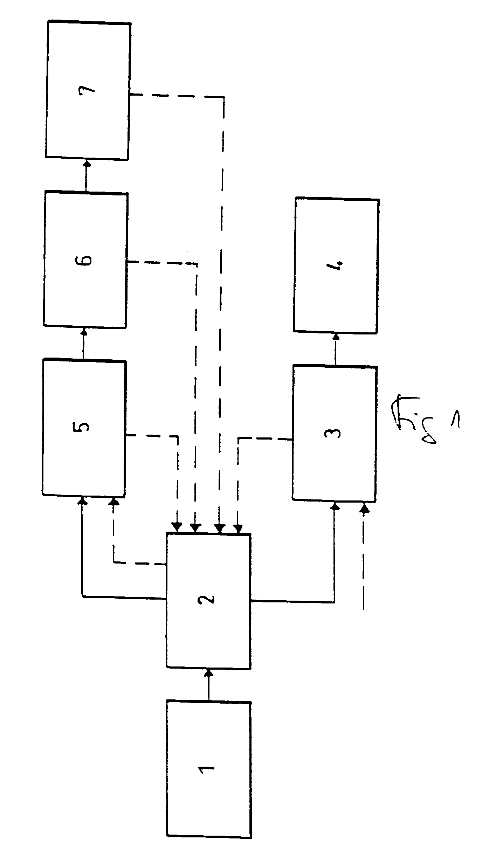

Cet exemple est donné en référence à la figure unique qui représente schématiquement sous forme de rectangles numérotés de 1 à 7 les étapes du procédé selon l'invention.

Sur ce schéma, les circuits des produits ont été représentés par des flèches en trait plein, les circuits de l'eau ont été représentés en flèches discontinues.

On traite dans l'installation représentée schématiquement sur le schéma de la figure des chutes neuves revêtues d'une couche de zinc et d'huile de coupe issues des usines d'automobiles françaises d'emboutissage profond selon les étapes suivantes :

Tout d'abord, on réalise dans l'étape 1 un froissage grossier des tôles dans un broyeur à marteaux articulés montés sur axes et rotor. Le broyeur est d'une puissance de 920 kW. Ce premier broyage est effectué en maintenant le broyeur porte ouverte. Cette première opération permet d'augmenter l'efficacité de l'étape suivante d'attaque chimique, par création de fissures dans la couche de zinc et séparation des tôles éventuellement collées.

Les tôles froissées issues de cette première étape 1 sont ensuite soumises à l'étape 2 d'attaque chimique en les plongeant dans un bain de solution caustique titrée à environ 10 %, à 85°C et pendant 45 minutes. Le zinc se trouve alors mis en solution au cours de cette étape et ce sont les tôles débarassées de leur revêtement de zinc qui sortent à l'autre extrémité du bain d'attaque chimique.

Après cette étape 2, les produits suivent deux chemins différents :
- d'une part, les tôles dézinguées sont rincées à contre-courant dans une étape 3 réalisée dans un crible rotatif équipé de douches, pendant 15 minutes. Une fois rincées, les tôles dézinguées sont ensuite broyées une seconde fois au cours d'une nouvelle étape de broyage 4 réalisée dans un broyeur identique à celui utilisé au cours de l'étape 1. Le broyage dans cette étape 4 se fait dans les mêmes conditions que dans l'étape 1, à l'exception près que le broyage est réalisé dans cette étape, porte fermée. Le produit récupéré à l'issue de cette étape de broyage présente une densité proche de 1,5.

Sur les 3000 tonnes de tôles zinguées traitées, on récupère environ 2935 tonnes de tôles dézinguées à l'issue de l'étape 4.
- d'autre part, la solution caustique chargée en zinc, issue de l'étape 2, est soumise à une étape 5 d'électrolyse : elle est plus précisémment envoyée dans un dispositif d'électrolyse constitué de 20 cellules coniques de 4000 litres chacune, fonctionnant 24 h sur 24 h et dont la conductivité est de l'ordre de 450 mmho/cm. Les cathodes des cellules sont en magnésium. Une différence de potentiel de 4,2 V est maintenue entre les anodes et les cathodes. Dans ces conditions, le zinc se dépose sous forme d'une poudre fine sur les cathodes et peut être décroché par simples vibrations imposées à ces cathodes et vient se déposer au fond des cuves d'électrolyse. Le zinc métallique récupéré au cours de cette étape est ensuite soumis à une étape 6 de décantation/séparation puis à une étape 7 de conditionnement où il est mis sous la forme de disques épais d'environ 25 sur 15 cm.

65 tonnes de zinc sont ainsi récupérées à partir des 3000 tonnes de tôles zinguées traitées.

Un avantage tout particulier de l'installation décrite dans cet exemple est qu'elle fonctionne sans rejeter d'eau à l'extérieur de l'installation, la totalité de l'eau introduite se trouvant réutilisée au cours du processus.

## Revendications

1. Procédé de valorisation de déchets constitués de tôles recouvertes sur au moins une face d'une couche de zinc, caractérisé en ce qu'il consiste à soumettre lesdits déchets aux étapes successives suivantes :
a) une première étape dite de traitement mécanique desdits déchets destinée à améliorer l'accessibilité desdites couches de zinc à une attaque chimique ultérieure, en augmentant la surface d'attaque accessible des parties formant les couches de zinc, d'une part en réalisant la séparation desdites tôles les unes des autres par froissage desdits déchets et, d'autre part, en créant des fissures dans lesdites couches de zinc,
b) une deuxième étape dite d'attaque chimique destinée à dissoudre le zinc, par immersion desdits déchets dans un bain basique,
c) une troisième étape de séparation des tôles débarrassées du zinc et du bain d'attaque chimique ayant dissous le zinc,
d) une quatrième étape de traitement par électrolyse du bain d'attaque chimique pour récupérer le zinc dissous à la (aux) cathode(s).

2. Procédé selon la revendication 1, caractérisé en ce que l'étape de traitement mécanique est réalisée dans un broyeur déchiqueteur, en provoquant le passage desdits déchets à travers des grilles de calibre préalablement déterminé.

3. Procédé selon l'une des revendications 1 ou 2, caractérisé en ce que l'attaque basique est réalisée par immersion desdits déchets dans un bain de soude.

4. Procédé selon l'une des revendications 1 à 3, caractérisé en ce que la tôle récupérée à l'issue de l'étape c) est ensuite soumise à une étape de lavage destinée à éliminer totalement les traces basiques.

5. Procédé selon la revendication 4, caractérisé en ce que l'étape de lavage est réalisée par introduction desdites tôles dans un tambour rotatif de nettoyage perforé.

6. Procédé selon l'une des revendications 1 à 5, caractérisé en ce que la tôle débarrassée du zinc est ensuite soumise à une étape de densification.

7. Procédé selon la revendication 6, caractérisé en ce que ladite densification est réalisée par broyage desdits déchets.

8. Procédé selon l'une des revendications 1 à 7, caractérisé en ce que le zinc se déposant à la (aux) cathode(s) est détaché en continu de ladite (desdites) cathode(s).

9. Procédé selon la revendication 8, caractérisé en ce que la (les) cathode(s) sont constituées de magnésium, de façon à pouvoir éliminer le zinc déposé en continu, en imposant des vibrations à ladite (aux dites) cathode(s).

10. Procédé selon l'une des revendications 8 ou 9, caractérisé en ce que l'on élimine en continu l'électrolyte contenant en suspension le zinc détaché de ladite (desdites) cathode(s) et que l'on concentre ensuite cette suspension pour récupérer le zinc élémentaire.

11. Application du procédé selon l'une des revendications 1 à 10, pour valoriser des déchets dits chutes neuves de tôles zinguées dans l'industrie automobile, lesdits déchets étant formés lors des différentes opérations d'élaboration des automobiles à partir desdites tôles zinguées, en particulier lors des étapes d'emboutissage, pour récupérer les tôles dites tôles dézinguées réutilisables notamment en fonderies et/ou du zinc métallique élémentaire.

12. Application du procédé selon l'une des revendications 1 à 10 pour valoriser un déchet constitué d'une tôle d'acier recouverte sur au moins une face d'une couche de zinc destinée à le protéger contre la corrosion.

## Patentansprüche

1. Verfahren zur Verwertung von Abfällen, die aus Blechen bestehen, die auf mindestens einer Oberfläche von einer Zinkschicht bedeckt sind, dadurch gekennzeichnet, daß man die genannten Abfälle den folgenden aufeinanderfolgenden Stufen unterwirft:
a) einer ersten Stufe der mechanischen Behandlung der Abfälle, um die Zugänglichkeit der genannten Zinkschichten für einen späteren chemischen Angriff zu verbessern durch Vergrößerung der zugänglichen Angriffs-Oberfläche der Teile, welche die Zinkschichten tragen, indem man einerseits die genannten Bleche durch Zerknittern der genannten Abfälle voneinander trennt und andererseits Risse in den genannten Zinkschichten erzeugt;
b) einer zweiten Stufe des chemischen Angriffs zum Auflösen des Zinks durch Eintauchen der genannten Abfälle in ein basisches Bad,
c) einer dritten Stufe der Trennung der von Zink befreiten Bleche von dem chemischen Angriffsbad mit dem darin gelösten Zink, und
d) einer vierten Stufe der elektrolytischen Behandlung des chemischen Angriffsbades zur Rückgewinnung des an der (den) Kathode(n) gelösten Zinks.

2. Verfahren nach Anspruch 1, dadurch gekennzeichnet, daß die Stufe der mechanischen Behandlung in einem Zerkleinerungs-Shredder durchgeführt wird, indem man die genannten Abfälle durch Gitterroste mit vorher festgelegten Abmessungen passiert.

3. Verfahren nach einem der Ansprüche 1 oder 2, dadurch gekennzeichnet, daß der basische Angriff durch Eintauchen der genannten Abfälle in ein Laugenbad (Sodabad) durchgeführt wird.

4. Verfahren nach einem der Ansprüche 1 bis 3, dadurch gekennzeichnet, daß das in der Stufe (c) zurückgewonnene Blech anschließend einer Waschstufe unterworfen wird, um die basischen Spuren vollständig zu entfernen.

5. Verfahren nach Anspruch 4, dadurch gekennzeichnet, daß die Waschstufe durchgeführt wird durch Einführen der genannten Bleche in eine perforierte rotierende Putztrommel.

6. Verfahren nach einem der Ansprüche 1 bis 5, dadurch gekennzeichnet, daß das von Zink befreite Blech anschließend einer Verdichtungsstufe unterworfen wird.

7. Verfahren nach Anspruch 6, dadurch gekennzeichnet, daß die genannte Verdichtung durch Zerkleinern der genannten Abfälle durchgeführt wird.

8. Verfahren nach einem der Ansprüche 1 bis 7, dadurch gekennzeichnet, daß das sich auf der (den) Kathode(n) abscheidende Zink kontinuierlich von der (den) genannten Kathode(n) abgelöst wird.

9. Verfahren nach Anspruch 8, dadurch gekennzeichnet, daß die Kathode(n) aus Magnesium besteht (bestehen), um das abgeschiedene Zink kontinuierlich entfernen zu können, indem man die genannte(n) Kathode(n) in Vibrationen versetzt.

10. Verfahren nach einem der Ansprüche 8 oder 9, dadurch gekennzeichnet, daß man den Elektrolyten, der das von der (den) genannten Kathode(n) abglöste Zink in Suspension enthält, kontinuierlich entfernt und anschließend diese Suspension einengt, um das elementare Zink zurückzugewinnen.

11. Anwendung des Verfahrens nach einem der Ansprüche 1 bis 10 zur Verwertung von sogenannten neuen Verschnitt-Abfällen von verzinkten Blechen in der Automobilindustrie, wobei die genannten Abfälle bei den verschiedenen Arbeitsgängen bei der Herstellung von Automobilen aus den genannten verzinkten Blechen, insbesondere in den Tiefziehstufen,entstehen, um die entzinkten Bleche, die insbesondere in Gießereien wiederverwendbar sind, und/oder das elementare metallische Zink zurückzugewinnen.

12. Anwendung des Verfahrens nach einem der Ansprüche 1 bis 10 zur Verwertung eines Abfalls, der aus einem Stahlblech besteht, das auf mindestens einer Oberfläche von einer Zinkschicht bedeckt ist, die dazu dient, das Stahlblech gegen Korrosion zu schützen.

## Claims

1. A method of upgrading waste material comprising sheet metal coated with a zinc plating on at least one side thereof, characterised in that it consists in subjecting said waste material to the following successive steps :
a) a first step referred to as mechanical processing step of said waste material to improve the accessibility of said zinc layers to a subsequent chemical etching, by increasing the accessible etching surface of the parts forming the zinc layers, on the one hand by carrying out the separation of said sheet metal from each other by the crushing of said waste material and, on the other, by creating cracks in said zinc layers,
b) a second step known as chemical etching to dissolve the zinc, by the immersion of said waste material in a basic bath,
c) a third step of separation of the zinc-free sheet metal from the chemical etching bath having dissolved the zinc,
d) a fourth step of treatment by electrolysis of the chemical etching bath to recover the zinc dissolved about the cathode(s).

2. The method according to claim 1, characterised in that the mechanical processing step is carried out in a shredder mill, by allowing said waste material to pass through grates of pre-determined size.

3. The method according to one of claims 1 or 2, characterised in that the basic etching is carried out by the immersion of said waste material in a bath of sodium hydroxide solution.

4. The method according to one of claims 1 to 3, characterised in that the sheet metal recovered at the end of step c) is then subjected to a washing step to totally remove the traces of base.

5. The method according to claim 4, characterised in that the washing step is carried out by the introduction of said sheet metal in a perforated rotary cleaning drum.

6. The method according to one of claims 1 to 5, characterised in that the zinc-free sheet metal is then subjected to a densification step.

7. The method according to claim 6, characterised in that said densification is carried out by the grinding of said waste material.

8. The method according to one of claims 1 to 7, characterised in that the zinc deposited about the cathode(s) is continuously detached from said cathode(s).

9. The method according to claim 8, characterised in that the cathode(s) consist of magnesium, so as to be able to remove the deposited zinc continuously, by bringing about vibrations to said cathode(s).

10. The method according to one of claims 8 or 9, characterised in that the electrolyte containing the zinc detached from said cathode(s) in suspension is continuously removed, and that this suspension is then concentrated to recover the elementary zinc.

11. Application of the method according to one of claims 1 to 10, to upgrade waste material known as fresh scraps of zinc-plated sheet metal in the automobile industry, said waste material being formed during various operations of automobile manufacture from said zinc plated sheet metal, particularly during the steps of pressing, to recover the sheet metal referred to as zinc-free plated sheet metal which is re-usable especially in foundries, and/or elementary metallic zinc.

12. Application of the method according to one of claims 1 to 10 to upgrade a waste material consisting of a steel sheet metal plated on at least one side with a layer of zinc to protect it from corrosion.
